# EUROPEAN PATENT APPLICATION

(11) **EP 4 797 484 A1**
(43) Date of publication of application: **26.08.2026**
(21) Application number: 26156430.6
(22) Date of filing: 04.02.2026
(51) Int. Cl.: H02J 4/00, B64D 27/35, H02H 7/26

(54) **ELECTRIC PROPULSION SYSTEM ARCHITECTURE**

(30) Priority: 25.02.2025 US 202519062875
(71) Applicant: GE Aviation Systems Limited, Bishops Cleeve Cheltenham Gloucestershire GL52 8SF (GB)
(72) Inventor: ELDER, James Angelo, Cheltenham, GL52 8SF (GB)
(74) Representative: Openshaw & Co.

(57) **Abstract**

An electric distribution architecture is described herein. In some embodiments, the electric distribution architecture (300) for an aircraft (100) includes at least one electrical source (314, 324), a plurality of loads (348) including at least one high energy load (350) and at least one low energy load (354) and a power distribution system (332). The power distribution system (332) includes a plurality of contactors (338, 340, 342) configured to selectively distribute electrical power from each of the at least one electrical source (314, 324) to each of the plurality of loads (348). In some approaches, at least one first fast acting high energy protection device (316, 326) is electrically coupled in series with each at least one electrical source (314, 324), and at least one second fast acting high energy protection device (358) is electrically coupled in series with each of the at least one high energy loads (350). In some approaches, the power distribution system (332) is devoid of any high energy protection devices (316, 326, 352).

## Description

### TECHNICAL FIELD

These teachings relate generally to an electric propulsion systems architecture and more particularly to protection for an electric propulsion system architecture.

### BACKGROUND

Electrical power system architectures are used in various contexts to distribute electrical power to multiple separate systems. In aircraft, hybrid electric and all electric propulsion system architectures typically include electrical sources, distribution systems, and electrical loads. For example, aircraft utilize electrical power for propulsors, avionics, motors or other electrical equipment. To meet the electrical requirements for an electrical propulsion system, multiple levels of protection are required. Accordingly, an architecture designed to increase the protection functions of an aircraft electrical power system may be desirable.

### BRIEF DESCRIPTION OF DRAWINGS

Various needs are at least partially met through provision of the electric propulsion systems architecture described in the following detailed description, particularly when studied in conjunction with the drawings. A full and enabling disclosure of the aspects of the present description, including the best mode thereof, directed to one of ordinary skill in the art, is set forth in the specification, which refers to the appended figures, in which:
FIG. 1 comprises a schematic view of an aircraft in accordance with various embodiments of these teachings;
FIG. 2 comprises a schematic diagram of an electric propulsion system architecture for an aircraft in accordance with various embodiments of these teachings;
FIG. 3 comprises a schematic diagram of an electric propulsion system architecture for an aircraft in accordance with various embodiments of these teachings; and
FIG. 4 comprises a schematic diagram of an electric propulsion system architecture for an aircraft in accordance with various embodiments of these teachings.

Elements in the figures are illustrated for simplicity and clarity and have not necessarily been drawn to scale. For example, the dimensions and/or relative positioning of some of the elements in the figures may be exaggerated relative to other elements to help to improve understanding of various embodiments of the present teachings. Also, common but well-understood elements that are useful or necessary in a commercially feasible embodiment are often not depicted in order to facilitate a less obstructed view of these various embodiments of the present teachings. Certain actions and/or steps may be described or depicted in a particular order of occurrence while those skilled in the art will understand that such specificity with respect to sequence is not actually required.

### DETAILED DESCRIPTION

The approaches herein provide an electric propulsion system architecture deployed in an electrical power system of an aircraft. In these regards and as will be described herein, protection devices are selectively distributed throughout the electric propulsion system architecture to provide multiple levels of fault management. The protection devices may be deterministic, dissimilar, and fast acting to reduce a fault energy and isolate a fault.

Traditionally, in aircraft electrical propulsion systems, multiple levels of electrical management may be necessary. Current hybrid electric and all electric propulsion systems architectures are being developed with each individual component having protection mechanisms. However, these protection mechanisms are being developed generally in isolation and to previous standards causing sub optimal arrangements for protection functions and design and leading to a proliferation of protection devices. In aircraft operations, this proliferation may lead to high costs and weight issues in the aircraft.

Accordingly, the electric distribution architecture for an aircraft as described herein may involve at least one electrical source, a plurality of loads including at least one high energy load and at least one low energy load and a power distribution system including a plurality of contactors configured to provide power steering functions. In addition, at least one fast acting high energy protection device is electrically coupled in series with each electrical source and at least one second fast acting high energy protection device is electrically coupled in series with each high energy load. Advantageously, the protection functions are moved upstream and downstream of the power distribution system. Thus, the power distribution system is devoid of fast acting high energy protection devices, providing weight savings and reducing cost. Further, the distribution of the protection devices throughout the architecture provide each energy source with fast acting overcurrent protection such that the distribution box can take in any combination of energy sources and provide contactors for power steering functions to allow the system to continue to operate under a single fault from any energy source.

The terms and expressions used herein have the ordinary technical meaning as is accorded to such terms and expressions by persons skilled in the technical field as set forth above except where different specific meanings have otherwise been set forth herein. The word "or" when used herein shall be interpreted as having a disjunctive construction rather than a conjunctive construction unless otherwise specifically indicated. The terms "coupled," "fixed," "attached to," and the like refer to both direct coupling, fixing, or attaching, as well as indirect coupling, fixing, or attaching through one or more intermediate components or features, unless otherwise specified herein.

The singular forms "a", "an", and "the" include plural references unless the context clearly dictates otherwise.

As used herein throughout the specification and claims, "high energy protection device" refers to any component, system, or mechanism designed to detect, prevent, or mitigate high energy faults, such as, for example, short circuits, overcurrent conditions and the like in high energy loads. In at least some instances, this includes components, systems, or mechanisms that are designed to detect, prevent, or mitigate high energy faults in electrical machines, instrumentation, or components of or operably connected to the propulsion system of an aircraft.

As used herein throughout the specification and claims, "low energy protection devices" refer to any component, system, or mechanism designed to detect, prevent, or mitigate low energy faults, such as, for example, minor overcurrent conditions and the like in low energy loads. In at least some instances, this includes components, systems, or mechanisms that are designed to detect, prevent or mitigate minor overcurrent conditions in electrical machines, instrumentation, or components of the aircraft not included in or operably connected to the propulsion system.

As used herein throughout the specification and claims, "fast acting" refers to a capability of a protection device to detect and respond to an event within a response time. In some examples, the response time may be less than 10 milliseconds. In other examples, "fast acting" refers to faster than "slow acting."

As used herein throughout the specification and claims, "slow acting" refers to refers to a capability of a protection device to detect and respond to an event within a response time. In some examples, the response time may be greater than 10 millisecond. In at least some instances, the response time may be greater than 10 milliseconds. In other examples, "slow acting" refers to slower than "fast acting."

Approximating language, as used herein throughout the specification and claims, is applied to modify any quantitative representation that could permissibly vary without resulting in a change in the basic function to which it is related. Accordingly, a value modified by a term or terms such as "about", "approximately", and "substantially", are not to be limited to the precise value specified. In at least some instances, the approximating language may correspond to the precision of an instrument for measuring the value, or the precision of the methods or machines for constructing or manufacturing the components and/or systems. For example, the approximating language may refer to being within a 10 percent margin.

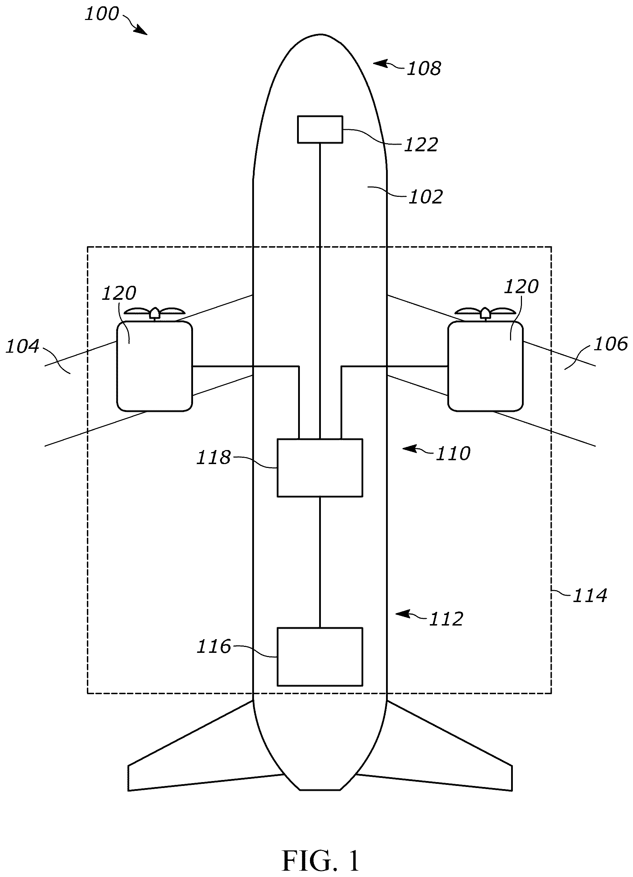

The foregoing and other benefits may become clearer upon making a thorough review and study of the following detailed description. Referring now to the drawings, and in particular to FIG. 1, a schematic view of an aircraft 100 that is compatible with many of these teachings is provided. The aircraft 100 includes a fuselage 102 forming a main body portion of the aircraft 100. The fuselage 102 includes a forward section 108, a middle section 110, and an aft section 112. A first wing 104 extends from a port side of the aircraft 100, and a second wing 106 extends from a starboard side of the aircraft 100.

The aircraft 100 further includes a propulsion system 114 that includes one or more electrical sources 116, one or more distribution systems 118, and one or more propulsors 120. The one or more distribution systems 118 electrically couples the one or more electrical sources 116 to the one or more propulsors 120, and one or more electric components 122 of the aircraft 100. For the embodiment depicted in FIG. 1, the one or more electrical sources 116 are located in the aft section 112 of the aircraft 100, the one or more distribution system 118 are located in the middle section 110 of the aircraft 100 and the one or more propulsors 120 are supported on the first wing 104 and the second wing 106, respectively. For example, the one or more propulsors 120 may be an electric motor to receive electric power from the one or more distribution systems 118 and convert the electric power into a mechanical, rotational force to, e.g., drive a fan and generate thrust. The electric components 122 may be distributed throughout the aircraft 100 in any suitable manner.

As will be appreciated, the aircraft 100 depicted in FIG. 1 is provided by way of example only, and, in other exemplary embodiments, aspects of the present disclosure may be incorporated into any other suitable aircraft 100. Similarly, the propulsors 120 depicted in FIG. 1 are also provided by way of example only. Aspects of the present disclosure may be incorporated into, or otherwise utilized with, any other suitable propulsors, such as any other suitable gas turbine engines having an electric machine (e.g., other turbofan engines, open rotor turbofan engines, turboprop engines, turboshaft engines, turbojet engines), any other suitable electric fans (e.g., ducted fans, distributed fan, vertical thrust fans, horizontal thrust fans, combination fans), or the like.

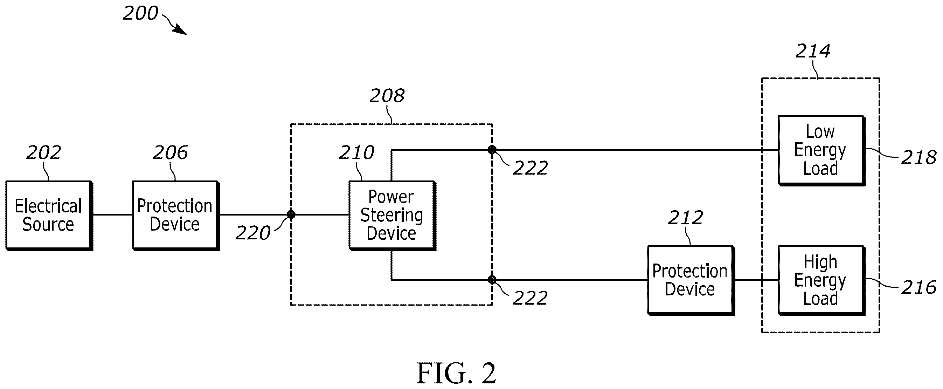

Referring now to FIG. 2, a schematic diagram for an electrical system architecture 200 in accordance with various aspects of the present disclosure is provided. The exemplary electrical system architecture 200 may be incorporated into the aircraft 100 of FIG. 1. As will be appreciated, the electrical system architecture 200 includes at least one electrical source 202, a first protection device 206, a power distribution system 208 including a power steering device 210, a second protection device 212, and a plurality of loads 214 that includes at least one high energy load 216 and at least one low energy load 218. The power distribution system 208 includes at least one input 220 in electrical connection with each of the at least one electrical source 202 and a plurality of outputs 222 in electrical connection with each of the plurality of loads 214. As will be appreciated, the at least one electrical source 202 is in electrical connection with the plurality of loads 214 via the power distribution system 208.

The electrical source 202 is configured to provide electrical power, e.g., direct-current (DC) electrical power and/or alternating-current (AC) electrical power. In particular, the electrical source 202 may include a fuel cell module, a generator, a battery module, or any other or other energy, voltage, current, or power source.

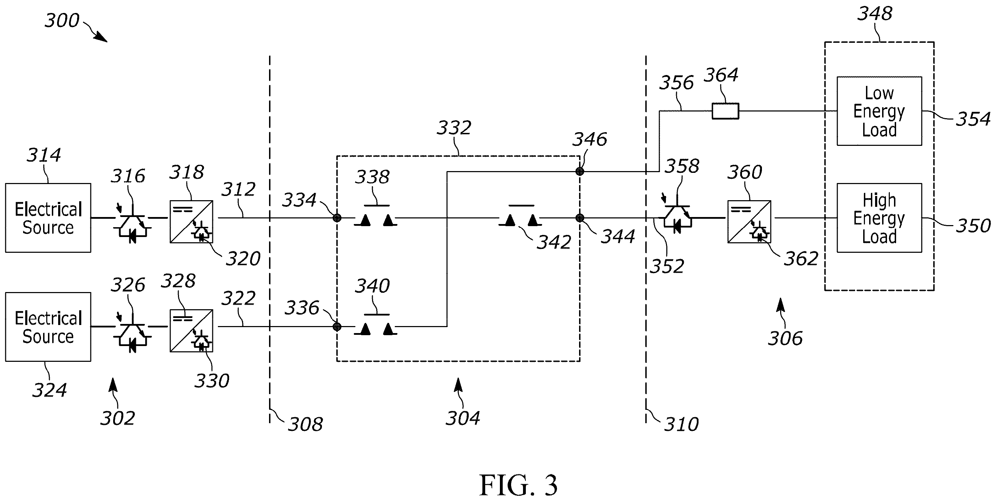

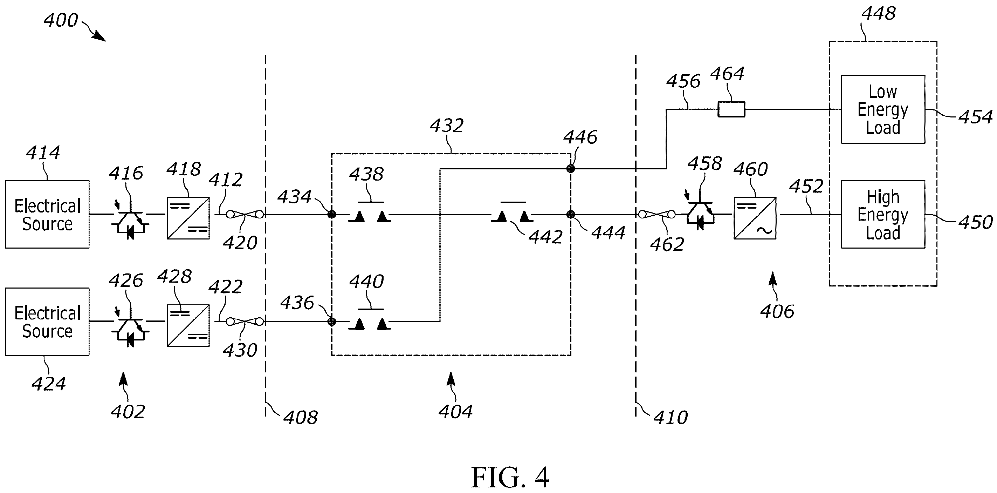

The first protection device 206 is connected electrically to the electrical source 202 to provide fast acting overcurrent protection. The first protection device 206 includes at least one first fast acting high energy protection device. In examples, the first protection device 206 may include two dissimilar fast acting high energy protection devices (e.g., as shown in FIG. 3) or a fast high energy protection device and a slow acting high energy protection (e.g., as shown in FIG. 4). The specific structure and arrangement are described in greater detail with respect to FIG. 3 and FIG. 4.

The power distribution system 208 includes a power steering device 210. The power steering device 210 may include a plurality of contactors (e.g., as shown in FIG. 3 and FIG. 4 and discussed hereinbelow), to provide power steering functions between the at least one electrical source 202 and the plurality of loads 214. Advantageously, the power distribution system 208 is devoid of any of the high energy protection devices. In forms, the power steering device 210 may be configured to selectively distribute electrical power from the electrical source 202 to the plurality of loads 214.

The second protection device 212 is connected electrically to the high energy load 216. The second protection device 212 includes at least one second fast acting high energy protection device. In examples, the second protection device 212 may include two dissimilar fast acting high energy protection devices (e.g., as shown in FIG. 3) or a fast high energy protection device and a slow acting high energy protection (e.g., as shown in FIG. 4). The specific structure and arrangement are described in greater detail with respect to FIG. 3 and FIG. 4.

The plurality of loads 214 are configured to receive electrical power, e.g., direct-current (DC) electrical power and/or alternating-current (AC) electrical power. The plurality of loads 214 include at least one high energy load 216 and at least one low energy load 218. In some forms, the at least one high energy load 216 may include any electrical component in or operably connected to the propulsion system 114 of the aircraft 100 as shown in FIG. 1 and the at least one low energy load 218 may include any electrical component of the aircraft not included in or operably connected to the propulsion system 114 of the aircraft 100 as shown in FIG. 1. In some forms, the at least one high energy load 216 may be a primary load on the one or more distribution systems 118 as shown in FIG 1 and the at least one low energy loads 218 may be a secondary or auxiliary load on the one or more distribution systems 118 as shown in FIG. 1. In some forms, the at least one high energy load 216 may include components with higher energy demands compared to the at least one low energy load 218. In some forms, the at least one high energy load 216 and the at least one low energy load 218 may be configured operate at the same voltage level but the at least one low energy load 218 may draw lower current than the at least one high energy load 216. In particular, the at least one high energy load 216 may include a motor, a motor drive unit, or an electric machine in a propulsor 120 of an aircraft 100 shown in FIG. 1. The at least one low energy load 218 may include, for example, lighting systems, heating elements, a pump, an auxiliary power unit, electrical distribution equipment, avionic systems, cockpit displays, or instrumentation.

It should be appreciated that although only a single electrical source and a single high energy load are depicted in FIG. 2, in other exemplary embodiments, any suitable number of electrical sources, high energy loads and low energy loads may be included. For example, the electrical system architecture 200 may include two electrical sources and two high energy loads with each electrical sources and each high energy load are connected to a respective protection device. As described above, the protection devices are located near each electrical source and each high energy load to prevent fault propagation. In this manner, the power distribution system may be used for power steering functions, thereby optimizing the electrical system architecture 200 by selectively distributing the protection devices throughout the electrical system architecture 200 to maximize power management and minimize redundant protection devices for weight savings.

Referring to FIG. 3, one example of the exemplary electrical system architecture 300 in accordance with various aspects of the present disclosure is provided. The electrical system architecture 300 includes an energy generation and conversion section 302, a distribution section 304 and an energy inversion and consumption section 306. Section breaks 308, and 310 are defined between adjacent sections of the electrical system architecture 300. The exemplary electrical system architecture 300 may be incorporated into the aircraft 100 of FIG. 1. In one non-limiting embodiment, the energy generation and conversion section 302 may be incorporated in the aft section 112 of the aircraft 100, the distribution section 304 may be incorporated in the middle section 110 of the aircraft 100, and the energy inversion and consumption section 306 may be incorporated, in part, on the first wing 104 or second wing 106 between the forward section 108 and the middle section 110, or in the middle section 110.

The energy generation and conversion section 302 includes a first power branch 312 in parallel with a second power branch 322. The first power branch 312 includes a first electrical source 314 in series connection with a first fast acting high energy protection device 316, a first converter 318 and a second fast acting high energy protection device 320. The second power branch 322 includes a second electrical source 324 in series connection with a third fast acting high energy protection device 326, a second converter 328 and a fourth fast acting high energy protection device 330.

The first and second electrical sources 314, 324 may include any suitable electrical source, such as, for example, a fuel cell module, a generator, a battery module, or any other or other energy, voltage, current, or power source. The first electrical source 314 may be the same type of source as the second electrical source 324, or alternatively, may be a different type of source than the second electrical source 324.

The first fast acting high energy protection device 316 and third fast acting high energy protection device 326 provide short circuit protection to ensure that a fault condition such as a single fault in either the first power branch 312 or the second power branch 322 is removed. In some aspects, when the first fast acting high energy protection device 316 or the third fast acting high energy protection device 326 fail to trip in a timely manner (e.g., within some predetermined time limit), it may cause a downstream high energy protection device to trip to remove the fault condition. For this reason, the second fast acting high energy protection device 320 and the fourth fast acting high energy protection device 330 are provided downstream to trip in the event the first or third fast acting high energy protection device 316, 326 fail to remove the fault current, thereby isolating the fault to a single power output (e.g., the first power branch 312 or the second power branch 322).

Additionally, the first fast acting high energy protection device 316 and the second fast acting high energy protection device 320 include sufficiently dissimilar fast acting high energy protection devices, and similarly, the third fast acting high energy protection device 326 and fourth fast acting high energy protection device 330 include sufficiently dissimilar fast acting high energy protection devices. It should be appreciated that the first and third fact acting high energy protection device 316, 326 are sufficiently dissimilar in design to the second and fourth fast acting high energy protection device 320, 330, respectively, to prevent a common mode failure. As used herein, "sufficiently dissimilar" refers to the intentional design, architecture and construction of the fast acting high energy device using distinct (e.g., completely different) components, materials, build processes, design architecture, and the like.

In some embodiments, the second fast acting high energy protection device 320 is integrated in the first converter 318, and similarly, the fourth fast acting high energy protection device 330 is integrated in the second converter 328. In this manner, the first and second converter 318, 328 may operate in converter mode and, upon detection of a current fault, act as a solid-state circuit breaker.

The distribution section 304 includes a distribution system 332 including a first input 334 in electrical connection with the first power branch 312 and a second input 336 in electrical connection with the second power branch 322. A plurality of contactors 338, 340, 342 are arranged in the distribution system 332. The distribution section 304, and more specifically, the distribution system 332 is devoid of any fast acting high energy protection devices. In some embodiments, the distribution system 332 may be devoid of any of the high energy protection devices and low energy protection devices. Such a configuration allows for the distribution system 332 to provide power steering functions to selectively distribute electrical power from the electrical sources 314, 324 to the plurality loads 348. In some forms, the distribution system 332 includes a power distribution box and the plurality of contactors 338, 340, 342 are enclosed in the power distribution box.

As depicted in the exemplary embodiment of FIG. 3, the distribution system 332 further includes a first outlet 344 and a second outlet 346 in electrical connection with the plurality of loads 348. In particular, the first outlet 344 is in electrical connection with at least one high energy load 350 through a third branch 352 and the second outlet 346 is in electrical connection with at least one low energy load 354 through a fourth branch 356. The third branch 352 includes a fifth fast acting high energy protection device 358 and an inverter 360 in series connection with the at least one high energy load 350. The fourth branch 356 includes at least one low energy protection device 364 in series connection with the at least one low energy load 354. The at least one low energy protection device 364 may be arranged in the distribution system 332 or outside the distribution system 332.

In some embodiments, the at least one high energy load 350 includes a motor or an electric machine of a propulsor 120 of an aircraft 100 as shown in FIG. 1. In some aspects, the motor is designed to operate in a motor mode (i.e., a source of electrical power) converting electrical energy into mechanical energy to drive a shaft of the propulsor to produce thrust or a generator mode (i.e., reverse current) converting the mechanical energy from the rotating shaft into electrical energy to produce reverse current. As such, a sixth fast acting high energy protection device 362 is in series electrical connection with the fifth fast acting high energy protection device 358 to provide protection and switching capability to the at least one high energy load 350 without tripping the electrical sources. The fifth fast acting high energy protection device 358 and sixth fast acting high energy protection device 362 include sufficiently dissimilar fast acting high energy protection devices. In some forms, the sixth fast acting high energy protection device 362 is integrated in the inverter 360.

Referring to FIG. 4, another example of the electrical system architecture 200 of FIG. 2 in accordance with various aspects of the present disclosure is provided. The electrical system architecture 400 includes an energy generation and conversion section 402, a distribution section 404 and an energy inversion and consumption section 406. Section breaks 408 and 410 are defined between adjacent sections of the electrical system architecture 400. The exemplary electrical system architecture 400 may be incorporated into the aircraft 100 of FIG. 1. In one non-limiting embodiment, the energy generation and conversion section 402 may be incorporated in the aft section 112 of the aircraft 100, the distribution section 404 may be incorporated in the middle section 110 of the aircraft 100, and the energy inversion and consumption section 406 may be incorporated, in part, on the first wing 104 or second wing 106 between the forward section 108 and the middle section 110, or in the middle section 110.

The electrical system architecture 400 includes components similar to those shown and described with reference to FIG. 3 and the reference numerals in FIG. 4 are generally similar to corresponding reference numerals in FIG. 3. In contrast to the dissimilar protection scheme incorporating sufficiently dissimilar fast acting high energy protection devices as described with reference to FIG. 3, the electrical system architecture 400 uses a dissimilar protection scheme incorporating dissimilar types of high energy protection devices.

The energy generation and conversion section 402 include a first power branch 412 in parallel with a second power branch 422. The first power branch 412 includes a first electrical source 414 in series connection with a first fast acting high energy protection device 416, a first converter 418 and a slow acting high energy protection device 420. The second power branch 422 includes a second electrical source 424 in series connection with a second fast acting high energy protection device 426, a second converter 428 and a second slow acting high energy protection device 430.

The first and second electrical sources 414, 424 may include any suitable electrical source, such as, for example, a fuel cell module, a generator, a battery module, or any other or other energy, voltage, current, or power source. The first electrical source 414 may be the same type of source as the second electrical source 424, or alternatively, may be a different type of source than the second electrical source 424.

The first fast acting high energy protection device 416 and second fast acting high energy protection device 426 provide short circuit protection to ensure that a fault condition such as a single fault in either the first power branch 412 or the second power branch 422 is removed. In some aspects, when the first fast acting high energy protection device 416 or the second fast acting high energy protection device 426 fail to trip in a timely manner (within some predetermined time limit), it may cause a downstream high energy protection device to trip to remove the fault condition. For this reason, the first slow acting high energy protection device 420 and the second slow acting high energy protection device 430 are provided downstream to trip in the event the first or second fast acting high energy protection device 416, 426 fail to remove the fault current, thereby isolating the fault to a single power output (e.g., the first power branch 412 or the second power branch 422).

In some embodiments, the first converter 418 and the second converter 428 include integrated solid state components to operate in converter mode and, upon detection of a current fault, act as a solid-state circuit breaker. The integrated solid state components may be similar in design, architecture and construction to the fast acting high energy protection devices 416, 426. Thus, the first or second slow acting high energy protection device 420, 420 are provided downstream to trip in the event both the first or second fast acting high energy protection device 416, 426 and the first and second converter 418, 428 fail to trip due to a common mode failure (i.e., similar solid state components, semiconductors, etc.).

It should be appreciated that the first and second fact acting high energy protection device 416, 426 are sufficiently dissimilar in design to the first and second fast acting high energy protection device 420, 430, respectively, to prevent a common mode failure.

The distribution section 404 includes a distribution system 432 including a first input 434 in electrical connection with the first power branch 412 and a second input 436 in electrical connection with the second power branch 422. A plurality of contactors 438, 440, 442 are arranged in the distribution system 432. The distribution section 404, and more specifically, the distribution system 432 is devoid of any fast acting high energy protection devices or slow acting high energy protection devices. Such a configuration allows for the distribution system 432 to provide power steering functions to selectively distribute electrical power from the electrical sources 414, 424 to the plurality of loads 448. In some forms, the distribution system 432 includes a power distribution box and the plurality of contactors 438, 440, 442 are enclosed in the power distribution box.

As depicted in the exemplary embodiment of FIG. 4, the distribution system 432 further includes a first outlet 444 and a second outlet 446 in electrical connection with the plurality of loads 448. In particular, the first outlet 444 is in electrical connection with at least one high energy load 450 through a third branch 452 and the second outlet 446 is in electrical connection with at least one low energy load 454 through a fourth branch 456. The third branch 452 includes a third fast acting high energy protection device 458 and an inverter 460 in series connection with the at least one high energy load 450. The fourth branch 456 includes at least one low energy protection device 464 in series connection with the at least one low energy load 454. The at least one low energy protection device 464 may be arranged in the distribution system 432 or outside the distribution system 432.

In some embodiments, the at least one high energy load 450 includes a motor or an electric machine of a propulsor 120 of an aircraft 100 as shown in FIG. 1. In some aspects, the motor is designed to operate in a motor mode (i.e., a source of electrical power) converting electrical energy into mechanical energy to drive a shaft of the propulsor to produce thrust or a generator mode (i.e., reverse current) converting the mechanical energy from the rotating shaft into electrical energy to produce reverse current. As such, a third slow acting high energy protection device 462 is in series electrical connection with the third fast acting high energy protection device 458 to provide protection and switching capability to the at least one high energy load 450 without tripping the electrical sources. The third fast acting high energy protection device 458 and third slow acting high energy protection device 462 include sufficiently dissimilar high energy protection devices to prevent a common mode failure.

The fast acting high energy protection devices 416, 426, 458 may include various types of fast acting power switching devices. In one preferred form, it is contemplated that a solid state power controller (SSPC) may be used. However, it should be understood that any various types of power switching devices may be used, such as, for example, fast acting solid-state circuit breaker, or any other suitable fast acting power switching device. In addition, in at least some examples, a response time of the fast acting high energy protection devices is in the range of about 10 microseconds or less to about 10 milliseconds.

The slow acting high energy protection devices 420, 430, 462 may include any of various types of slow acting high energy protection device. In one example, it is contemplated that a fuse may be used, and in particular, a pyrofuse. However, it should be understood that any of various types of slow acting high energy protection devices may be used, such as, for example, circuit breakers, electrochemical relays, etc. In addition, in at least some examples, a response time of the slow acting high energy protection devices is in the range of between about 10 milliseconds to about 20 milliseconds. It is generally contemplated that the response time of the slow acting high energy protection devices is longer than a response time of fast acting high energy devices but shorter than a response time of the contactors.

Further, it is generally contemplated that although FIG. 3 and FIG. 4 depict two electrical sources, in other exemplary embodiments, any suitable number of electrical sources may be used (e.g., 1, 3, 4, etc.,).

Further, still, it is generally contemplated that although FIG. 3 and FIG. 4 depict the plurality of loads including one high energy load and one low energy load, the plurality of loads may include any suitable number of high energy loads and low energy loads. For example, without limitation, the plurality of loads may include two high energy loads (e.g., the two propulsors 120 of FIG. 1) and any suitable number of low energy loads (e.g., 2, 6, 12, 20, etc.).

Further aspects of the disclosure are provided by the subject matter of the following clauses:
An electric distribution architecture for an aircraft, comprising: at least one electrical source; a plurality of loads including at least one high energy load and at least one low energy load; a power distribution system including at least one input, each coupled to one of the at least one electrical source, and a plurality of outputs, each coupled to one of the plurality of loads, the power distribution system comprising a plurality of contactors configured to selectively distribute electrical power from each of the at least one electrical source to each of the plurality of loads; at least one first fast acting high energy protection device electrically coupled in series with each of the at least one electrical source; and at least one second fast acting high energy protection device electrically coupled in series with each of the at least one high energy loads; wherein the power distribution system is devoid of any high energy protection devices.

The electric distribution architecture of any preceding clause, wherein the at least one electrical source includes at least one of a generator, a fuel cell module, or a battery module.

The electric distribution architecture of any preceding clause, wherein the at least one high energy load includes an electric motor; and wherein the at least one low energy load includes at least one of a pump, a heating element, a lighting system, auxiliary power units, or electrical distribution equipment.

The electric distribution architecture of any preceding clause, wherein the power distribution system further comprises a power distribution box including at least one input, each coupled to one of the at least one electrical source, and a plurality of outputs, each coupled to one of the plurality of loads.

The electric distribution architecture of any preceding clause, wherein the plurality of contactors are enclosed in the power distribution box.

The electric distribution architecture of any preceding clause, wherein the at least one first fast acting high energy protection device further comprises two dissimilar first fast acting high energy protection devices, each electrically coupled in series with each of the at least one electrical source.

The electric distribution architecture of any preceding clause wherein the at least one second fast acting high energy protection device further comprises two dissimilar second fast acting high energy protection devices, each electrically coupled in series with each of the at least one high energy load.

The electric distribution architecture of any preceding clause, further comprising at least one low energy protection device electrically coupled with the at least one low energy load.

The electric distribution architecture of any preceding clause, further comprising: at least one first slow acting high energy protection device electrically coupled in series with the at least one first fast acting high energy protection device; and at least one second slow acting high energy protection device electrically coupled in series with the at least one second fast acting high energy protection device.

An electric distribution architecture for an aircraft, comprising: at least one electrical source; a plurality of loads including at least one high energy load and at least one low energy load; a power distribution system including at least one input, each coupled to one of the at least one electrical source, and a plurality of outputs, each coupled to one of the plurality of loads, the power distribution system comprising a plurality of contactors configured to selectively distribute electrical power from each of the at least one electrical source to each of the plurality of loads; at least two dissimilar first high energy protection devices, each in series electrical connection with each of the at least one electrical source; and at least two dissimilar second high energy protection devices each electrically coupled in series with each of the at least one high energy load.

The electric distribution architecture of any preceding clause, wherein the at least one electrical source includes at least one of a generator, a fuel cell module, or a battery module.

The electric distribution architecture of any preceding clause, wherein the at least one high energy load includes an electric motor; and wherein the at least one low energy load includes at least one of a pump, a heating element, a lighting system, auxiliary power units, or electrical distribution equipment.

The electric distribution architecture of any preceding clause, wherein the at least two dissimilar first high energy protection devices comprise a first slow acting high energy protection device electrically coupled in series with a first fast acting high energy protection device.

The electric distribution architecture of any preceding clause, wherein the at least two dissimilar first high energy protection devices comprise two first fast acting high energy protection devices, each fast acting high energy protection device including dissimilar solid state components.

The electric distribution architecture of any preceding clause, wherein the at least two dissimilar second high energy protection devices comprise a second slow acting high energy protection device electrically coupled in series with a second fast acting high energy protection device.

The electric distribution architecture of any preceding clause, wherein the at least two dissimilar second high energy protection devices comprise two second fast acting high energy protection device, each fast acting high energy protection device including dissimilar solid state components.

The electric distribution architecture of any preceding clause, wherein the power distribution system further comprises a power distribution box including at least one input each coupled to one of the at least one electrical source and a plurality of outputs each coupled to one of the plurality of loads.

The electric distribution architecture of any preceding clause, wherein the plurality of contactors are enclosed in the power distribution box.

The electric distribution architecture of any preceding clause, further comprising at least one low energy protection device electrically coupled with the at least one low energy load.

The electric distribution architecture of any preceding clause, wherein the power distribution system is devoid of any high energy protection devices.

## Claims

1. An electric distribution architecture (300) for an aircraft (100) comprising:
at least one electrical source (314, 324);
a plurality of loads (348) including at least one high energy load (350) and at least one low energy load (354);
a power distribution system (332) including at least one input (334, 336) each coupled to one of the at least one electrical source (314, 324) and a plurality of outputs (344, 346) each coupled to one of the plurality of loads (348), the power distribution system (332) comprising a plurality of contactors (338, 340, 342) configured to selectively distribute electrical power from each of the at least one electrical source (314, 324) to each of the plurality of loads (348);
at least one first fast acting high energy protection device (316, 326) electrically coupled in series with each at least one electrical source (314, 324); and
at least one second fast acting high energy protection device (358) electrically coupled in series with each of the at least one high energy loads (350);
wherein the power distribution system (332) is devoid of any high energy protection devices (316)(326)(352).

2. The electric distribution architecture (300) of claim 1, wherein the at least one electrical source (314, 324) includes at least one of a generator, a fuel cell module, or a battery module.

3. The electric distribution architecture (300) of any preceding claim, wherein the at least one high energy load (350) includes an electric motor.

4. The electric distribution architecture (300) of any preceding claim, wherein the at least one low energy load (354) includes at least one of a pump, a heating element, a lighting system, auxiliary power units, or electrical distribution equipment.

5. The electric distribution architecture (300) of any preceding claim, wherein the power distribution system (332) further comprises a power distribution box including at least one input (334, 336), each coupled to one of the at least one electrical source (314, 324), and a plurality of outputs (344, 346), each coupled to one of the plurality of loads (348).

6. The electric distribution architecture (300) of claim 5, wherein the plurality of contactors (338, 340, 342) are enclosed in the power distribution box.

7. The electric distribution architecture (300) of any preceding claim, wherein the at least one first fast acting high energy protection device (316, 324) further comprises two dissimilar first fast acting high energy protection devices (316, 320, 326, 330), each electrically coupled in series with each at least one electrical source (314, 324).

8. The electric distribution architecture (300) of claim 7, wherein the two dissimilar first high energy protection devices (316, 320, 326, 330) comprise two first fast acting high energy protection devices, each fast acting high energy protection (316, 320, 326, 330) device including dissimilar solid state components.

9. The electric distribution architecture of claim 7, wherein the at least two dissimilar first high energy protection (416, 420, 426, 430) devices comprise a first slow acting high energy protection device (420, 430) electrically coupled in series with a first fast acting high energy protection device (416, 426).

10. The electric distribution architecture of any preceding claim, wherein the at least one second fast acting high energy protection device (358) further comprises two dissimilar second fast acting high energy protection devices (358, 362), each electrically coupled in series with each of the at least one high energy load (350).

11. The electric distribution architecture of claim 10, wherein the two dissimilar second high energy protection devices (358, 362) comprise two second fast acting high energy protection device (358, 362), each fast acting high energy protection device including dissimilar solid state components.

12. The electric distribution architecture of claim 10, wherein the at least two dissimilar second high energy protection devices (458, 462) comprise a second slow acting high energy protection device (462) electrically coupled in series with a second fast acting high energy protection device (458).

13. The electric distribution architecture of any preceding claim, further comprising at least one low-energy protection device (364) electrically coupled with the at least one low energy load (354).

14. The electric distribution architecture of any preceding claim, further comprising:
at least one first slow acting high energy protection device (420, 430) electrically coupled in series with the at least one first fast acting high energy protection device (416, 426); and
at least one second slow acting high energy protection device (462) electrically coupled in series with the at least one second fast acting high energy protection device (458).

15. The electric distribution architecture of any preceding claim, wherein the power distribution system (332) is devoid of any high energy protection devices (316, 320, 352) and low energy protection devices (364).
